# EUROPEAN PATENT SPECIFICATION

(11) **EP 3 626 073 B1**
(45) Date of publication and mention of the grant of the patent: **29.01.2025**
(21) Application number: 19198502.7
(22) Date of filing: 20.09.2019
(51) Int. Cl.: A01K 61/60, A01K 61/55, A01K 61/54

(54) **AQUAFARMING SYSTEM**
AQUAKULTURSYSTEM
SYSTÈME D'AQUACULTURE

(30) Priority: 20.09.2018 CA 3018010
(43) Date of publication of application: 25.03.2020
(73) Proprietor: Bouctouche Bay Industries Ltd., Bouctouche, New Brunswick E4S 2J2 (CA)
(72) Inventor: GUNDERSON, Steen Nicholas, Bouctouche, New Brunswick E4S 2J2 (CA)
(74) Representative: Papula Oy

(56) References cited:
- JP-U- S 565 458
- US-A1- 2017 215 390
- US-A1- 2018 213 752

## Description

### FIELD

The invention relates to the field of aquafarming, and more specifically to aquafarming systems for aquafarming.

### BACKGROUND

The aquafarming industry has grown in the last few decades with increased consumption of harvests such as oysters. Unfortunately, current aquafarming systems do not provide sufficient water to flow to the harvest, which leads to oysters expending energy for survival rather than growth and therefore higher mortality rates. As such, there is a need for an improved aquafarming system that can provide more water flow, and therefore more food, to the oysters and increase their size and reduce their mortality rate. Further, there is a need for floats that can be easily displaced over water and quickly and efficiently flipped upside down to access the harvests. Document US-2017/215390-A1 discloses a flotation device for an oyster basket.

### SUMMARY

The invention provides an aquafarming system comprising the technical features of independent claim 1. Preferred embodiments are set out in the dependent claims.

### BRIEF DESCRIPTION OF THE DRAWINGS

The following figures serve to illustrate various embodiments of features of the disclosure. These figures are illustrative and are not intended to be limiting.
Figure 1 is a perspective view of an aquafarming system in accordance with an embodiment of the present disclosure;
Figure 2 is a side view of the aquafarming system in accordance with an embodiment of the present disclosure;
Figure 3 is a front view of a float utilized in the aquafarming system in accordance with an embodiment of the present disclosure;
Figure 4 is a lower perspective view of a float utilized in the aquafarming system in accordance with an embodiment of the present disclosure;
Figure 5 is an upper perspective view of a float utilized in the aquafarming system in accordance with an embodiment of the present disclosure;
Figure 6 is a perspective view of a float secured to a surface of a cage through the use of a lock in accordance with an embodiment of the present disclosure;
Figure 7 is a partial view of a lock secured to a surface of a cage in accordance with an embodiment of the present disclosure;
Figure 8 is an underside view of a lock secured to a surface of a cage in accordance with an embodiment of the present disclosure; and,
Figure 9 is an underside partial view of the float according to an embodiment of the present disclosure.

### DETAILED DESCRIPTION

The following embodiments are merely illustrative and are not intended to be limiting. It will be appreciated that various modifications and/or alterations to the embodiments described herein may be made without departing from the scope of the invention defined by the appended claims.

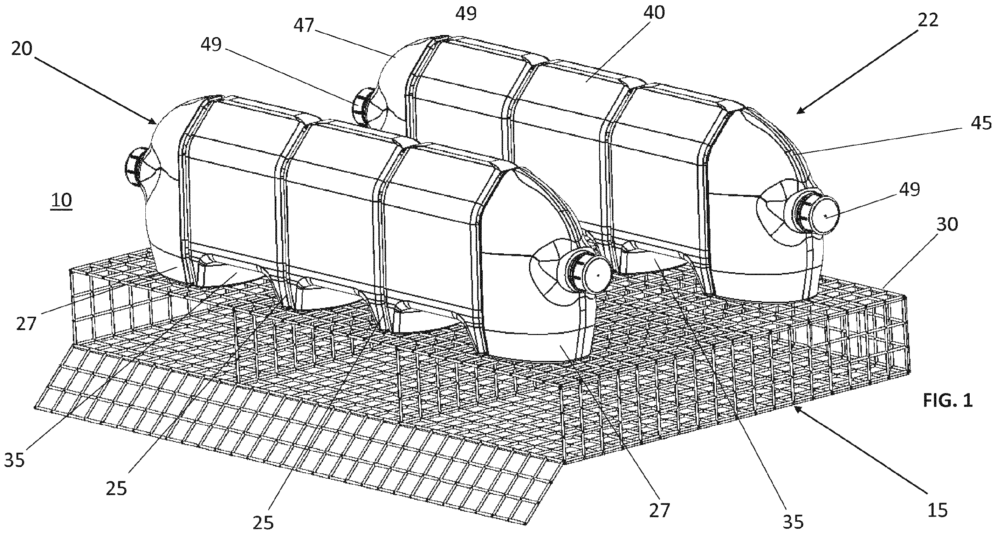

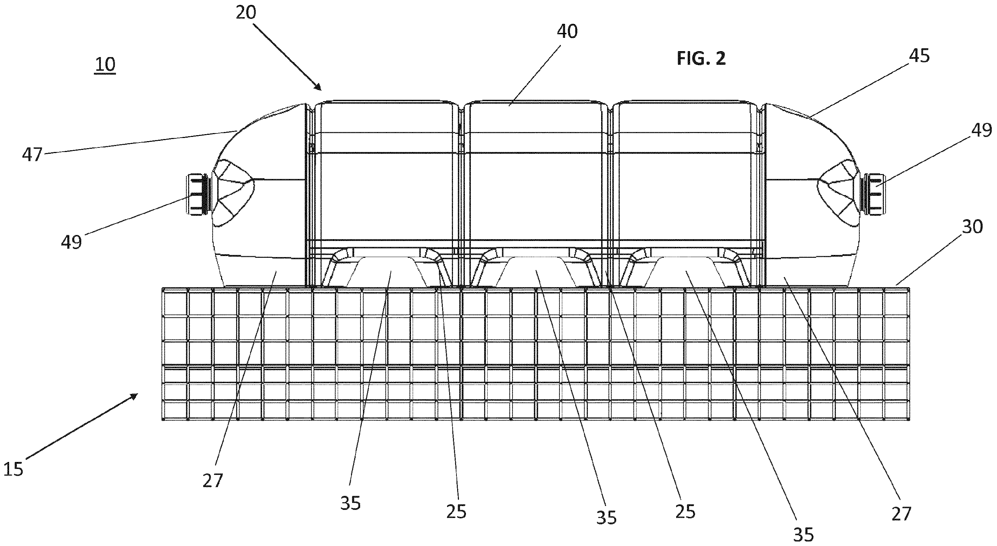

With reference to Figures 1 and 2 and according to an embodiment of the invention, an aquafarming system 10 is shown, the system 10 comprising a cage 15 to enclose a harvest (not shown) and a first and second float 20, 22 to provide buoyancy to the cage 15. The system 10 has two main positions: the feeding position, where the cage 15 is submerged and the floats 20, 22 provide the requisite buoyancy to keep the cage 15 near but under the water surface; and the drying position, where the cage 15 is above water and the floats 20, 22 are partially submerged and provide the requisite buoyancy for the cage 15 to remain generally above water. A worker skilled in the art would appreciate that although two floats 20, 22 are shown, a single float 20 or more than two floats 20, 22 would also be possible. As shown, the floats 20, 22 are comprised of inner and outer legs 25, 27, the legs 25, 27 being secured to a top surface 30 of the cage 15. The areas in between adjacent legs 25, 27 define flow channels 35. The flow channels 35 facilitate the passage of water in between the top surface 30 of the cage 15 and the adjacent legs 25, 27 of the floats 20, 22. In other words, the flow channels 35 enhance the cross flow and thus increase the feeding and flow exposure of the harvest in the system 10. Indeed, a preferred harvest will feed on phytoplankton that is carried by the flow of water, such that an increase in water flow will provide additional food to the harvest. Having an increased water flow also reduces the overheating of the harvest. When a harvest is overheating, it will put more energy into its survival rather than growth, which leads to smaller harvests and potentially increased harvest mortality rates. The floats 20, 22 are also comprised of a hydrodynamic top portion 40, the top portion 40 having a substantially "V" shape to improve displacement of the system 10 on the water surface. The floats 20, 22 are also comprised of first and seconds ends 45, 47 having a bow-like shape for reducing the resistance of the float 20 when travelling on the water surface. The floats 20, 22 are designed to be taller but only 10% larger by volume than typical floats used in the aquafarming industry to provide a higher elevation of the harvest relative to the water surface when the system 10 is in the drying position. A typical float in the oyster aquafarming industry has a continuous flat lower surface and it is this continuous flat lower surface that is in contact with the cage. Indeed, typical floats do not possess flow channels defined by adjacent legs. When the harvests are too close to the water surface, they are exposed to more water splashing, which increases the survival time of the spat and reduces the value of the harvest. Meanwhile, the increase in volume of the floats 20, 22 is kept to a minimum to facilitate movement of the floats 20, 22 when they are submerged and need to be lifted to the surface. This is especially crucial in winter or hurricane seasons when the system 10 is sunk to the bottom of the water to minimize the impact on the harvest. When the floats 20, 22 are brought back to the water surface, if they are too big this will cause stress on the cage 15 and lines (not shown), which is detrimental to the system 10. A worker skilled in the art would appreciate that the floats 20, 22 are comprised of removeable caps 49 positioned at each ends 45, 47 of the floats 20, 22. As the floats 20, 22 are hollow, the caps 49 are removed and allow for the floats 20, 22 to be filled with a substance, typically water, to sink the floats 20, 22 in at least the hurricane or winter seasons as described above.

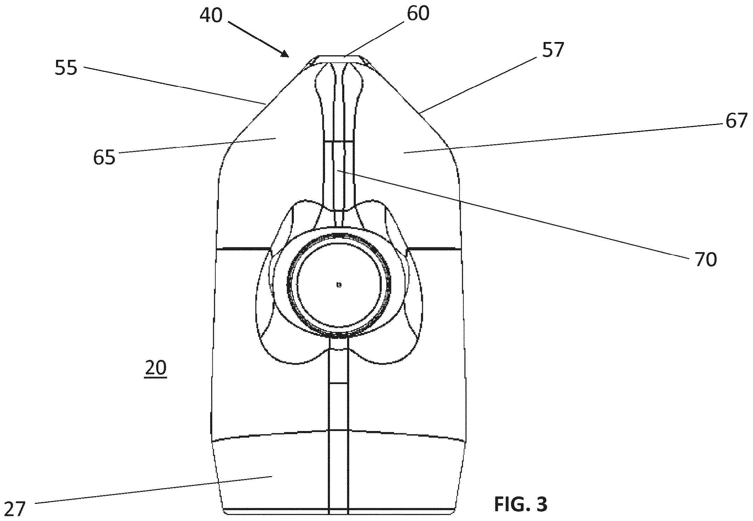

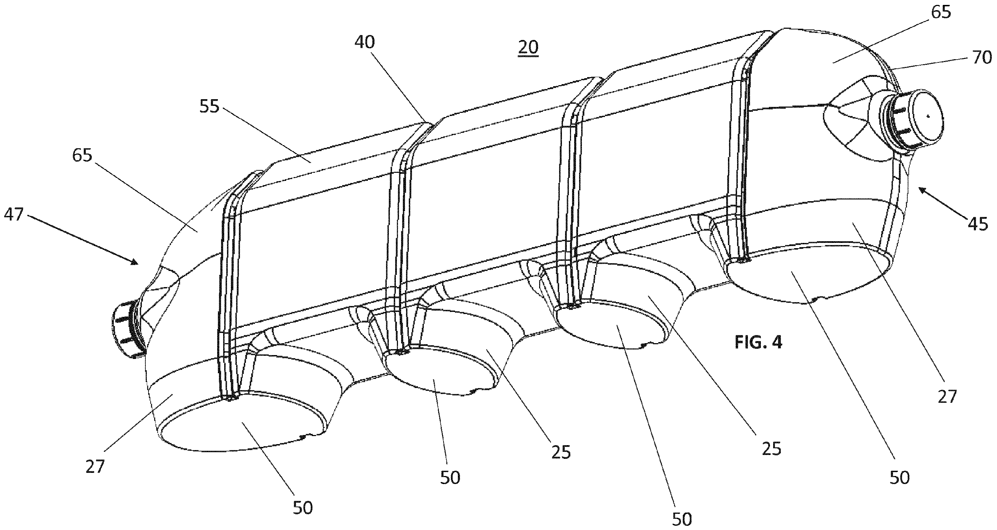

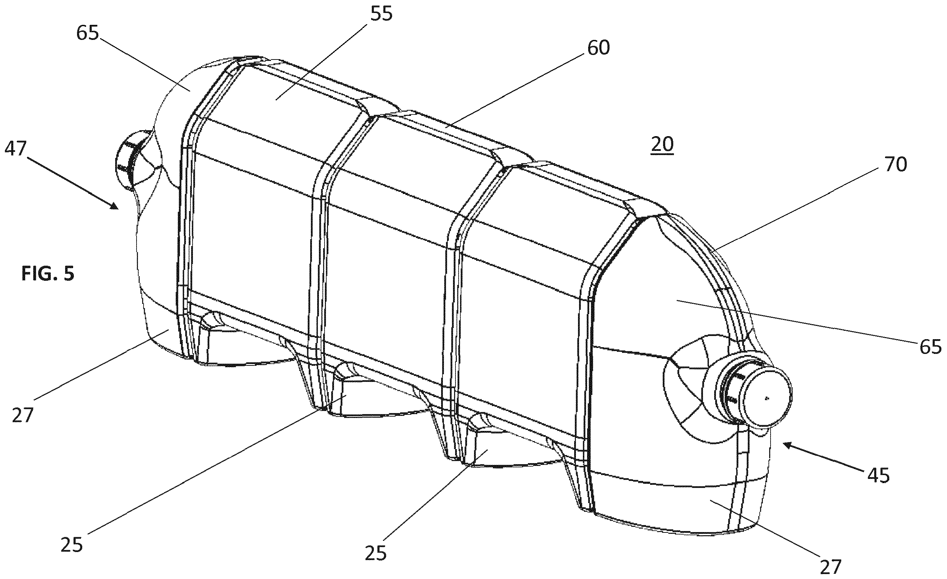

With reference to Figures 3, 4 and 5, a float 20 is shown in greater detail. As shown, the inner and outer legs 25, 27 of the float 20 terminate in a flat segment 50, the flat segment 50 positioned on the top surface (not shown) of the cage (not shown). The inner legs 25 are generally elliptically-shaped while the outer legs 27 are generally circularly-shaped. Adjacent legs 25, 27 define flow channels 35, which facilitate the passage of water in between the top surface of the cage (not shown) and the adjacent legs 25, 27 of the floats 20. The hydrodynamic top portion 40 of the float 20 is also shown in greater detail, having two opposed slanted faces 55, 57, terminating in a flat upper face 60, generally making a "V" shape. Meanwhile, the first and second ends 45, 47 of the float 20 have opposed curved faces 65, 67 terminating in a curved end 70. The opposed curved faces 65,67 of the first and second ends 45, 47 in combination with the opposed slanted faces 55, 57 of the top portion 40 provide the float 20 with improved displacement and reduced resistance when travelling on the water surface.

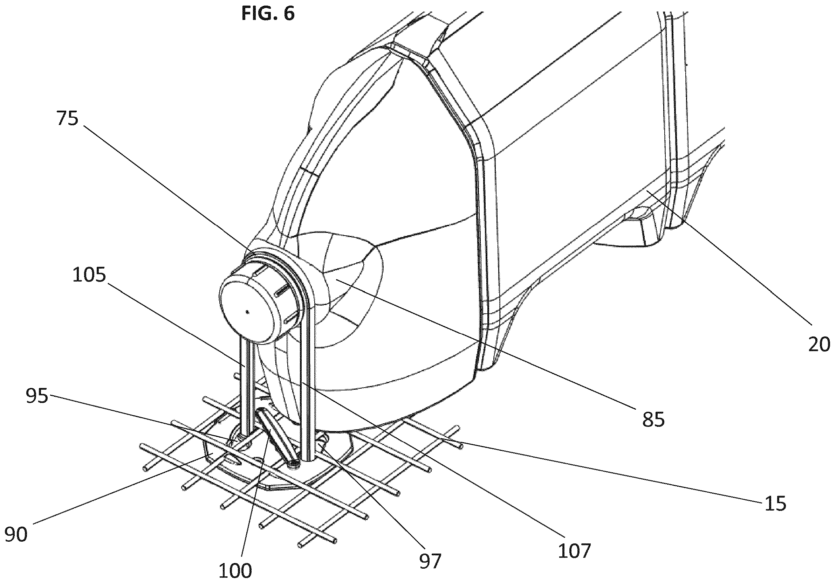

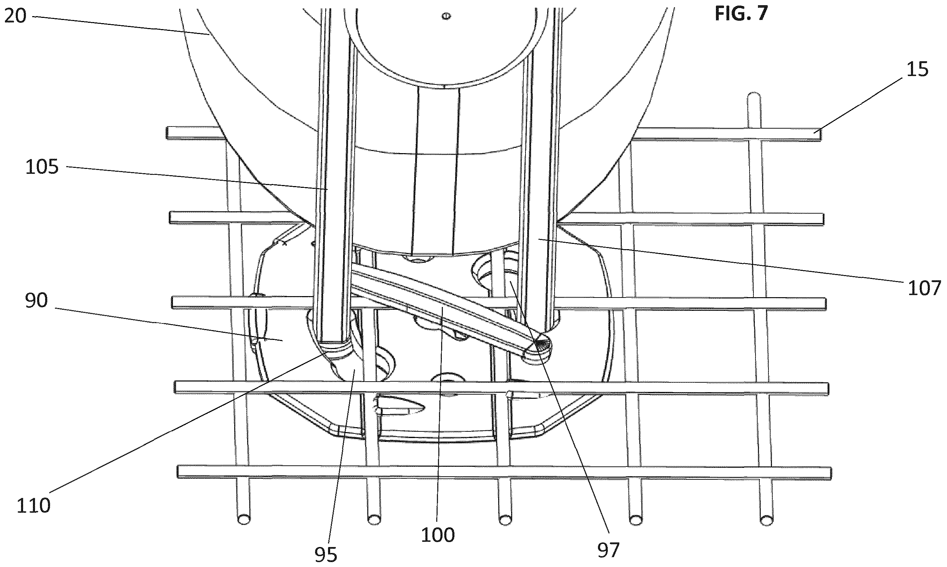

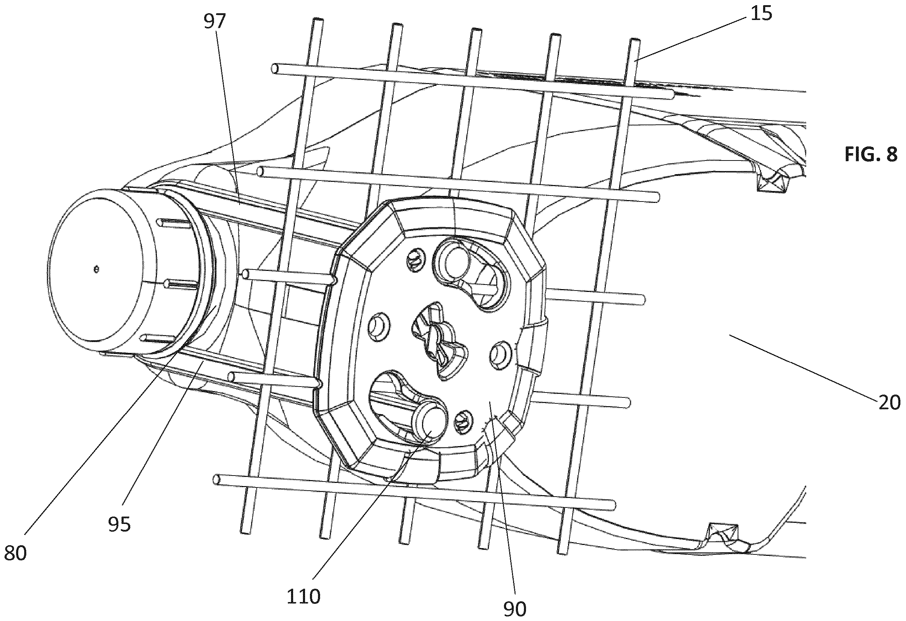

With reference to Figures 6, 7 and 8 and according to an embodiment of the invention, the float 20 is shown connected to the top portion of the cage 15 by means of a lock. The lock is generally comprised of a U-shaped member 75 and a plate 90. The U-shaped member 75 surrounds a recessed portion 80 of the neck 85 of the float 20 and connects to the plate 90 positioned below the top portion of the cage 15. The plate 90 is further comprised of two openings 95, 97 for receiving the U-shaped member 75. The plate 90 is also further comprised of a clip 100 to secure the plate 90 to the cage 15. The openings 95, 97 of the plate 90 have a wide portion and a narrow portion, the wide portion to receive two prongs 105, 107 of the U-shaped member 75. Indeed, the prongs 105, 107 terminate in a lip 110 that can fit through the wide portion and not the narrow portion of the openings 95, 97. To secure the float 20 to the cage 15, the U-shaped member 75 is first positioned around the recessed portion 80 of the neck 85 of the float 20. Then, the two prongs 105, 107 of the U-shaped member 75 are inserted into the wide portions of the corresponding openings 95, 97 of the plate 90. The plate 90 is then rotated until the lip 110 of the prongs 105, 107 is in the narrow portion of the openings 95, 97. The float 20 is then secured to the cage 15. A worker skilled in the art would appreciate that the same locking mechanism is provided at both ends of the float 20. A worker skilled in the art would further appreciate that although the U-shape member 75 is rigid, the lock could function as a string or rope provided that it can still secure the float 20 to the cage 15.

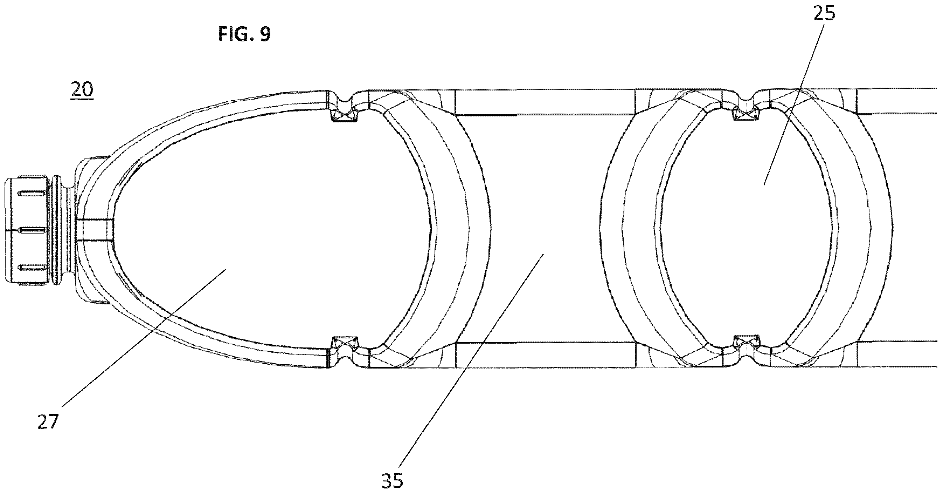

With reference to Figure 9 and according to an embodiment of the invention, a flow channel 35 of the float 20 is shown. The flow channel 35 is defined as having a central or inner portion as well as a peripheral or outer portion. As shown, due to the circular shape of the inner and outer legs 25, 27, the flow channel 35 has a narrower central portion and wider outer portion to facilitate the passage of water.

Many modifications of the embodiments described herein as well as other embodiments may be evident to a person skilled in the art having the benefit of the teachings presented in the foregoing description and associated drawings. It is understood that these modifications and additional embodiments are within the scope of the invention defined by the appended claims.

## Claims

1. An aquafarming system (10) comprising:
a cage (15) for enclosing a harvest; and,
at least one float (20, 22) secured to a top surface of the cage (15) to provide buoyancy to the cage (15), each one of the at least one float (20, 22) further comprising:
a hydrodynamic top portion (40) having slanted faces (55, 57) to allow for improved displacement on a water surface; and
a first and second end (45, 47) having a bow shape for reducing resistance of the at least one float (20, 22) when traveling on the water surface;
**characterised in that** each one of the at least one float (20, 22) further comprises:
at least two legs (25, 27) secured to the top surface (30) of the cage (15), the at least two legs (25, 27) defining at least one flow channel (35) allowing water to travel between the top surface (30) of the cage (15) and the at least one float (20, 22).

2. The aquafarming system of Claim 1 further comprising:
a feeding position, wherein the cage (15) is submerged and the at least one float (20, 22) provides buoyancy to keep the cage (15) under a water surface; and
a drying position, wherein the cage (15) is above water and the at least one float (20, 22) is partially submerged and provides buoyancy for the cage (15) to remain generally above water.

3. The aquafarming system of Claim 1 further comprised of two inner legs (25) and two outer legs (27), the inner legs (25) having a generally elliptical shape and the outer legs (27) having a generally circular shape.

4. The aquafarming system of Claim 1 wherein the flow channel (35) is further comprised of a central portion and an outer portion, the central portion being narrower that the outer portion.

5. The aquafarming system of Claim 1 wherein the at least one float (20, 22) is further comprised of at least one removable cap (49) to fill the at least one float (20, 22) with a substance.

6. The aquafarming system of Claim 1 wherein the at least one float (20, 22) is comprised of at least one neck (85), the at least one neck (85) further comprising a recessed portion (80).

7. The aquafarming system of Claim 1 further comprising a locking mechanism to secure the at least one float (20, 22) to the cage (15).

8. The aquafarming system of Claim 7 wherein the locking mechanism is further comprised of a U-shaped member (75), a plate (90) and a clip (100).

9. The aquafarming system of Claim 8 wherein the U-shaped member (75) is further comprised of two prongs (105, 107) terminating in a lip (110).

10. The aquafarming system of Claim 9 wherein the plate (90) is further comprised of at least two openings (95, 97), the at least two openings (95, 97) having a wide portion and a narrow portion, the wide portion to receive the two prongs (105, 107) and lock the at least one float (20, 22) to the cage (15).

## Patentansprüche

1. Aquakultursystem (10), umfassend:
einen Käfig (15) zum Umschließen einer Ernte; und
mindestens einen Schwimmer (20, 22), befestigt an einer oberen Fläche des Käfigs (15), um dem Käfig (15) Auftrieb bereitzustellen, wobei jeder eine von dem mindestens einen Schwimmer (20, 22) ferner umfasst:
ein hydrodynamisches Oberteil (40) mit geneigten Flächen (55, 57), um eine verbesserte Verlagerung auf einer Wasseroberfläche zu erlauben; und
ein erstes und zweites Ende (45, 47) mit einer Bogenform zum Reduzieren von Widerstand des mindestens einen Schwimmers (20, 22) beim Bewegen auf der Wasseroberfläche;
**dadurch gekennzeichnet, dass** jeder eine von dem mindestens einen Schwimmer (20, 22) ferner umfasst:
mindestens zwei Beine (25, 27), befestigt an der oberen Fläche (30) des Käfigs (15), wobei die mindestens zwei Beine (25, 27) mindestens einen Strömungskanal (35) definieren, der erlaubt, dass Wasser sich zwischen der oberen Fläche (30) des Käfigs (15) und dem mindestens einen Schwimmer (20, 22) bewegt.

2. Aquakultursystem nach Anspruch 1, ferner umfassend:
eine Fütterungsposition, wobei der Käfig (15) untergetaucht ist und der mindestens eine Schwimmer (20, 22) Auftrieb bereitstellt, um den Käfig (15) unter einer Wasseroberfläche zu halten; und
eine Trocknungsposition, wobei sich der Käfig (15) über Wasser befindet und der mindestens eine Schwimmer (20, 22) teilweise untergetaucht ist und dem Käfig (15) Auftrieb bereitstellt, so dass er allgemein über Wasser bleibt.

3. Aquakultursystem nach Anspruch 1, ferner umfassend zwei innere Beine (25) und zwei äußere Beine (27), wobei die inneren Beine (25) eine allgemein elliptische Form aufweisen und die äußeren Beine (27) eine allgemein runde Form aufweisen.

4. Aquakultursystem nach Anspruch 1, wobei der Strömungskanal (35) ferner einen mittleren Abschnitt und einen äußeren Abschnitt umfasst, wobei der mittlere Abschnitt schmaler als der äußere Abschnitt ist.

5. Aquakultursystem nach Anspruch 1, wobei der mindestens eine Schwimmer (20, 22) ferner mindestens eine entfernbare Kappe (49) zum Füllen des mindestens einen Schwimmers (20, 22) mit einem Stoff umfasst.

6. Aquakultursystem nach Anspruch 1, wobei der mindestens eine Schwimmer (20, 22) ferner mindestens einen Hals (85) umfasst, wobei der mindestens eine Hals (85) ferner einen vertieften Abschnitt (80) umfasst.

7. Aquakultursystem nach Anspruch 1, ferner umfassend einen Verriegelungsmechanismus zum Sichern des mindestens einen Schwimmers (20, 22) an dem Käfig (15).

8. Aquakultursystem nach Anspruch 7, wobei der Verriegelungsmechanismus ferner ein U-förmiges Element (75), eine Platte (90) und einen Clip (100) umfasst.

9. Aquakultursystem nach Anspruch 8, wobei das U-förmige Element (75) ferner zwei Zinken (105, 107) umfasst, die in einer Lippe (110) enden.

10. Aquakultursystem nach Anspruch 9, wobei die Platte (90) ferner mindestens zwei Öffnungen (95, 97) umfasst, wobei die mindestens zwei Öffnungen (95, 97) einen breiten Abschnitt und einen schmalen Abschnitt aufweisen, wobei der breite Abschnitt dazu vorgesehen ist, die zwei Zinken (105,107) aufzunehmen und den mindestens einen Schwimmer (20, 22) an dem Käfig zu verriegeln (15).

## Revendications

1. Système (10) d'aquaculture comprenant :
une cage (15) pour enfermer une récolte ; et,
au moins un flotteur (20, 22) fixé sur une surface supérieure de la cage (15) pour fournir une flottabilité à la cage (15), chacun des au moins un flotteur (20, 22) comprenant en outre :
une partie (40) supérieure hydrodynamique ayant des faces (55, 57) inclinées pour permettre un déplacement amélioré sur une surface d'eau ; et
une première et une seconde extrémité (45, 47) ayant une forme d'arc pour réduire la résistance de l'au moins un flotteur (20, 22) lors d'un déplacement sur la surface d'eau ;
**caractérisé en ce que** chacun des au moins un flotteur (20, 22) comprend en outre :
au moins deux branches (25, 27) fixées sur la surface (30) supérieure de la cage (15), les au moins deux branches (25, 27) définissant au moins un canal (35) d'écoulement permettant à l'eau de se déplacer entre la surface (30) supérieure de la cage (15) et l'au moins un flotteur (20, 22).

2. Système d'aquaculture selon la revendication 1 comprenant en outre :
une position d'alimentation, dans laquelle la cage (15) est submergée et l'au moins un flotteur (20, 22) fournit une flottabilité pour garder la cage (15) sous une surface d'eau ; et
une position de séchage, dans laquelle la cage (15) est au-dessus de l'eau et l'au moins un flotteur (20, 22) est partiellement submergé et fournit une flottabilité pour que la cage (15) reste généralement au-dessus de l'eau.

3. Système d'aquaculture selon la revendication 1 comprenant en outre deux branches (25) intérieures et deux branches (27) extérieures, les branches (25) intérieures ayant une forme généralement elliptique et les branches (27) extérieures ayant une forme généralement circulaire.

4. Système d'aquaculture selon la revendication 1 dans lequel le canal (35) d'écoulement comprend en outre une partie centrale et une partie extérieure, la partie centrale étant plus étroite que la partie extérieure.

5. Système d'aquaculture selon la revendication 1 dans lequel l'au moins un flotteur (20, 22) comprend en outre au moins un capuchon (49) amovible pour remplir l'au moins un flotteur (20, 22) avec une substance.

6. Système d'aquaculture selon la revendication 1 dans lequel l'au moins un flotteur (20, 22) comprend au moins un col (85), l'au moins un col (85) comprenant en outre une partie (80) évidée.

7. Système d'aquaculture selon la revendication 1, comprenant un outre un mécanisme de blocage pour fixer l'au moins un flotteur (20, 22) à la cage (15).

8. Système d'aquaculture selon la revendication 7 dans lequel le mécanisme de blocage comprend en outre un élément (75) en forme de U, une plaque (90) et une attache (100).

9. Système d'aquaculture selon la revendication 8 dans lequel l'élément (75) en forme de U comprend en outre deux broches (105, 107) se terminant par une lèvre (110).

10. Système d'aquaculture selon la revendication 9 dans lequel la plaque (90) comprend en outre au moins deux ouvertures (95, 97), les au moins deux ouvertures (95, 97) ayant une partie large et une partie étroite, la partie large pour recevoir les deux broches (105, 107) et verrouiller l'au moins un flotteur (20, 22) à la cage (15).
